# EUROPÄISCHE PATENTSCHRIFT

(11) **EP 3 183 501 B1**
(45) Veröffentlichungstag und Bekanntmachung des Hinweises auf die Patenterteilung: **25.01.2023**
(21) Anmeldenummer: 15750048.9
(22) Anmeldetag: 12.08.2015
(51) Int. Cl.: F24C 7/08

(54) **BEDIENVORRICHTUNG FÜR EIN HAUSHALTSGERÄT MIT EINEM DREHRING UND EINEM LICHTBAND**
OPERATING DEVICE FOR A DOMESTIC APPLIANCE HAVING A ROTARY RING AND HAVING A LIGHT STRIP
DISPOSITIF DE COMMANDE D'UN APPAREIL MÉNAGER MUNI D'UNE BAGUE ROTATIVE ET D'UNE BANDE LUMINEUSE

(30) Priorität: 19.08.2014 DE 102014216398
(43) Veröffentlichungstag der Anmeldung: 28.06.2017
(73) Patentinhaber: BSH Hausgeräte GmbH, 81739 München (DE)
(72) Erfinder: GOSS, Ulrich, 81739 München (DE); ORTMANN, Christoph, 81675 München (DE); SACHON, Robert, 80469 München (DE)
(86) Internationale Anmeldenummer: PCT/EP2015/068568
(87) Internationale Veröffentlichungsnummer: WO 2016/026751

(56) Entgegenhaltungen:
- EP-A1- 2 535 785
- EP-A1- 2 597 377
- DE-A1-102010 039 559
- DE-A1-102012 220 255
- US-A1- 2006 207 867
- US-A1- 2011 148 775

## Beschreibung

Die Erfindung betrifft eine Bedienvorrichtung für ein Haushaltsgerät, mit einem Bedienelement, welches einen Drehring aufweist. Mittels des Drehrings sind Betriebsbedingungen des Haushaltsgeräts abhängig von einer Drehbewegung einstellbar. Das Bedienelement weist einen elektronischen Anzeigebereich auf, der von dem Drehring umgeben ist. Darüber hinaus umfasst die Erfindung auch ein Haushaltsgerät mit einer derartigen Bedienvorrichtung.

Eine derartige Bedienvorrichtung sowie ein derartiges Haushaltsgerät sind aus der WO 2012/080 156 A1 bekannt.

Aus der EP 2 535 785 A1 ist eine Bedienvorrichtung für ein Haushaltsgerät bekannt, bei welcher ein Drehring zur Einstellung von Betriebsbedingungen des Haushaltsgeräts ausgebildet ist. Der Drehring ist frontseitig an einer Platte angeordnet. Dazu beabstandet und hinter der Frontplatte ist eine Anzahl verschiedener Leuchtdioden positioniert, die mit Lichtdiffusoren gekoppelt sind. Lichtdiffusoren münden in eine Rückseite der Platte. Die Leuchtdioden können individuell abhängig von einer Drehstellung des Drehrings angesteuert werden.

Aus der US 2011/0148775 A1 ist eine Bedienvorrichtung bekannt, bei welcher ein berührsensitiver Bedienring vorgesehen ist. Abhängig von dem Entlangstreifen an dem berührsensitiven Bedienring können individuelle optische Segmente aufleuchten.

Darüber hinaus ist aus der DE 10 2010 039 559 A1 eine Bedienvorrichtung für ein Hausgerät bekannt. Dort sind in einem Bedienelement Lichtleiter angeordnet, die Licht zu Randseiten des Bedienelements leiten.

Aus der US 2006/0207867 A1 ist ein Bedienelement bekannt, welches als zylinderförmiger Hohlzylinder ausgebildet ist. Innerhalb des Hohlzylinders ist eine Anzeigeeinheit angeordnet, auf welcher beabstandet zu dem umgebenden Drehring ein aufleuchtender Lichtbogen angezeigt werden kann.

Es ist Aufgabe der vorliegenden Erfindung, eine Bedienvorrichtung und ein Haushaltsgerät zu schaffen, bei welcher beziehungsweise bei welchem die Drehstellung des Drehrings für einen Nutzer einfacher erkennbar ist.

Diese Aufgabe wird durch eine Bedienvorrichtung für ein Haushaltsgerät als auch durch ein Haushaltsgerät gemäß den unabhängigen Ansprüchen gelöst.

Eine erfindungsgemäße Bedienvorrichtung für ein Haushaltsgerät umfasst ein Bedienelement, welches einen Drehring aufweist. Dieser Drehring ist somit relativ zu anderen Komponenten der Bedienvorrichtung drehbar, so dass er diesbezüglich im Hinblick auf eine Einstellung auch manuell betätigt wird und entsprechend bewegt wird. Mittels des Drehrings sind Betriebsbedingungen des Haushaltsgeräts abhängig von einer Drehbewegung beziehungsweise einer Drehstellung einstellbar. Das Bedienelement weist darüber hinaus auch noch einen elektronischen Anzeigebereich auf, der von dem Drehring umgeben ist. Somit können auch zusätzlich Informationen an dem Bedienelement selbst angezeigt werden, wobei hier durch die Anordnung des Anzeigebereichs und des Drehrings auch ein sehr kompakter Aufbau realisiert ist. Indem darüber hinaus insbesondere der Anzeigebereich ortsfest angeordnet ist und somit der Drehring relativ zu diesem Anzeigebereich, der eine weitere Komponente des Bedienelements darstellt, bewegbar ist, wird bei einer Betätigung des Drehrings der Anzeigebereich nicht mit bewegt und somit wird dann auch die darauf angezeigte Information nicht unerwünscht verdreht.

Ein wesentlicher Gedanke der Erfindung ist darin zu sehen, dass an dem Drehring angrenzend und separiert zu dem Drehring ein ringförmig umlaufendes optisches Lichtband ausgebildet ist, durch welches ein von dem Drehring bei einer Drehbewegung zurückgelegter Drehweg in seiner Länge optisch angezeigt ist. Durch diese Ausgestaltung wird einem Nutzer jederzeit ersichtlich und einfach nachvollziehbar quasi die Drehstellung des Drehrings relativ zum Anzeigebereich und/oder zu anderen Komponenten der Bedienvorrichtung dargestellt. Durch die Separierung zwischen dem Drehring und dem Lichtband können somit auch technisch einfache Ausgestaltungen im Hinblick auf die Anordnung der Lichtquellen des Lichtbands als auch zur Signalverbindung und Energieversorgung geschaffen werden. Es ist somit auch vorgesehen, dass das Lichtband ortsfest angeordnet ist und der Drehring separiert dazu auch relativ zu dem Lichtband dann drehbar ist. Indem darüber hinaus dieses vom Drehring separierte Lichtband jedoch unmittelbar angrenzend und somit in unmittelbarer Nähe und direkt benachbart dazu angeordnet ist, kann die Zuordnung für einen Nutzer höchst vorteilhaft erkannt werden und bezüglich der optischen Wahrnehmbarkeit auch durch das dann ebenfalls ringförmige Lichtband auch der Eindruck entstehen, dass dieses Lichtband noch Bestandteil des Drehrings ist. Die Drehstellung des Drehrings wird somit wesentlich verbessert wahrgenommen und die damit einhergehende auswählbare Betriebsbedingung kann verbessert nachvollzogen werden beziehungsweise es kann erkannt werden, wie weit ein Drehring gegebenenfalls noch gedreht werden muss, um eine gewünschte Betriebsbedingung einzustellen beziehungsweise auszuwählen.

Es ist vorgesehen, dass das Lichtband an einem dem Anzeigebereich abgewandten Außenrand des Drehrings angrenzend ausgebildet ist. Durch diese Ausgestaltung kann das Lichtband in radialer Richtung betrachtet auch breiter gestaltet werden, da somit dann der von dem Drehring umgebene Anzeigebereich nicht in seiner Größe verkleinert werden muss.

In einer weiteren vorteilhaften alternativen Ausführung, nicht Teil der Erfindung, ist vorgesehen, dass das Lichtband an einem dem Anzeigebereich zugewandten Innenrand des Drehrings angrenzend ausgebildet ist. Bei dieser Ausführung ist vorteilhaft, dass üblicherweise dann, wenn der Drehring von einem Nutzer mit seinen Fingern außenseitig oder an der Oberfläche berührt und gegriffen wird, das Lichtband dann nicht durch die Finger zumindest bereichsweise abgedeckt ist, so dass die jederzeit freiliegende Darstellung des Lichtbands auch uneingeschränkt wahrgenommen werden kann.

Es kann auch vorgesehen sein, dass bei einer weiteren Ausführung das Lichtband zweiteilig ausgebildet ist und sowohl an einem dem Anzeigebereich abgewandten Außenrand des Drehrings angrenzend ausgebildet ist, als auch an einem dem Anzeigebereich zugewandten Innenrand des Drehrings angrenzend ausgebildet ist. Bei einer derartigen Ausgestaltung ist somit der Drehring an beiden Ringrändern mit einem benachbarten Lichtband versehen, so dass er quasi von beiden Seiten her durch Lichtbänder eingefasst ist.

Vorzugsweise ist vorgesehen, dass der zurückgelegte Drehweg des Drehrings durch das Lichtband als zusammenhängende Linie angezeigt ist.

Es kann auch vorgesehen sein, dass der zurückgelegte Drehweg durch das Lichtband als aus unterbrochenen Einzelsegmenten zusammengesetzte Linie angezeigt ist, die somit dann quasi auch als gestrichelte Linie erkenntlich ist.

Vorzugsweise ist vorgesehen, dass eine Anzahl von optisch aufleuchtbaren Lichtsegmenten des Lichtbands 60 Elemente pro vollständigem Umlauf beträgt. Durch ein derartige spezifische Anzahl und eine entsprechende Segmentierung kann das Lichtband eine weitere Funktion aufnehmen, beispielsweise auch eine Minutenanzeige darstellen. Wird in dem Zusammenhang durch den Drehring ein Parameter, beispielsweise die Zeitdauer eines abzulaufenden Betriebsprogramms des Haushaltsgeräts eingegeben, wird durch diese konkrete Anzahl dann auch quasi eine Minutenanzeige kenntlich gemacht, da beispielsweise eine Stunde 60 Minuten beträgt und somit durch diese spezifische Anzahl der Segmentierung, der Umlauf dann auch genau in Minutenangabe optisch angezeigt werden kann.

Vorzugsweise ist vorgesehen, dass der Anzeigebereich des Bedienelements berührsensitiv ausgebildet ist.

Des Weiteren betrifft die Erfindung ein Haushaltsgerät mit zumindest einer erfindungsgemäßen Bedienvorrichtung oder einer vorteilhaften Ausgestaltung davon.

Durch die Erfindung wird es erreicht, dass eine Lichtlinie grafisch direkt am Drehring, jedoch separiert dazu platziert ist und auch direkt angrenzend umläuft. Die Lichtlinie beziehungsweise das Lichtband läuft im Hinblick auf das Aufleuchten insbesondere synchron mit der Drehbewegung des Drehrings.

Weitere Merkmale der Erfindung ergeben sich aus den Ansprüchen, den Figuren und der Figurenbeschreibung.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltsgeräts;
- Fig. 2: Darstellungen von beispielhaften Positionen eines Lichtbands eines Bedienelements mit zusammengesetzter Lichtlinie;
- Fig. 3: eine entsprechende Darstellung wie in Fig. 2, jedoch mit segmentierter Lichtlinie und somit gestrichelter Lichtlinie; und
- Fig. 4: eine beispielhafte Darstellung der Betätigung eines Drehrings des Bedienelements und automatisch ortsgenauem Mitlaufen des Aufleuchtens einer Lichtlinie eines Lichtbands.

In den Figuren werden gleiche oder funktionsgleiche Elemente mit den gleichen Bezugszeichen versehen.

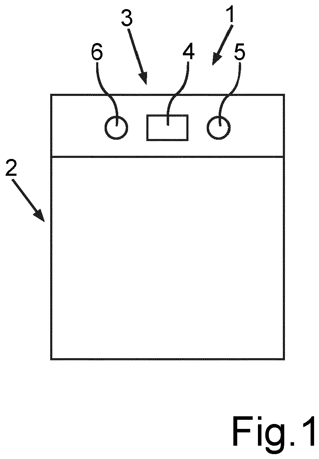

In Fig. 1 ist ein Haushaltsgerät 1 gezeigt, welches beispielsweise zur Pflege von Wäschestücken oder zum Zubereiten von Lebensmitteln oder zum Reinigen von Geschirr oder zum Lagern und Konservieren von Lebensmitteln ausgebildet ist. Das Haushaltsgerät 1 ist daher beispielsweise eine Waschmaschine oder ein Wäschetrockner oder ein Waschtrockner. Es kann in dem Zusammenhang jedoch dann auch ein Backofen oder ein Mikrowellengargerät oder ein Dampfgargerät sein. Ebenso kann es beispielsweise ein Kochfeld sein. Darüber hinaus kann das Haushaltsgerät 1 dann auch ein Geschirrspüler oder ein Kühlschrank oder ein Gefriergerät oder ein Kühl-Gefrier-Kombigerät sein.

Das Haushaltsgerät 1 umfasst ein Gehäuse 2 und eine Bedienvorrichtung 3. Die Bedienvorrichtung 3 umfasst beispielhaft zumindest eine Anzeigeeinheit 4 und zumindest ein Bedienelement 5, wobei hier ein weiteres Bedienelement 6 dargestellt ist. Es sei darauf hingewiesen, dass die positionelle Anordnung der Bedienvorrichtung 3 und damit insbesondere auch der Anzeigeeinheit 4 und der Bedienelemente 5 und 6, als auch deren Anzahl lediglich beispielhaft zu verstehen ist.

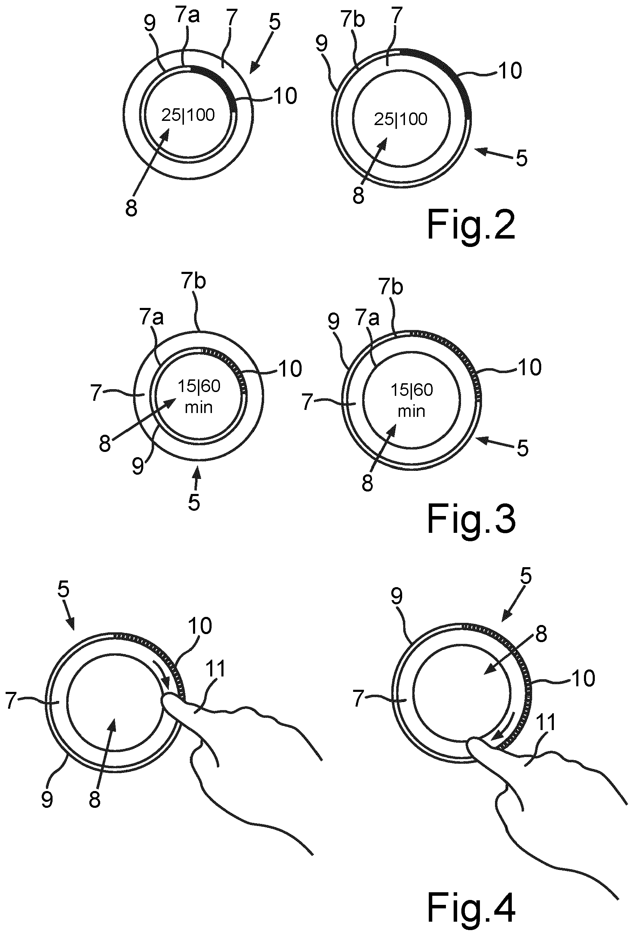

Das Bedienelement 5 ist so ausgebildet, dass es gemäß der Darstellung in Fig. 2 einen Drehring 7 aufweist, welcher um eine Achse senkrecht zur Figurenebene drehbar ist. Vorzugsweise ist der Drehring 7 sowohl gegen als auch im Uhrzeigersinn drehbar. Das Bedienelement 5 umfasst darüber hinaus einen elektronischen Anzeigebereich 8, der von dem Drehring 7 umlaufend umgeben ist. Der Anzeigebereich 8 ist ortsfest angeordnet und ist somit nicht drehbar. Der Drehring 7 kann somit relativ zum Anzeigebereich 8 und unabhängig davon bewegt werden. Durch eine Drehbewegung des Drehrings 7 kann eine Betriebsbedingung des Haushaltsgeräts 1 ausgewählt oder eingestellt werden.

Im in Fig. 2 auf dem linken Bild dargestellten Ausführungsbeispiel, nicht Teil der Erfindung, umfasst das Bedienelement 5 des Weiteren ein ringförmig ausgebildetes und umlaufendes optisches Lichtband 9. Es ist separat zum Drehring 7 ausgebildet und angeordnet und insbesondere auch feststehend positioniert, so dass in einer bevorzugten Ausführung der Drehring 7 relativ zum feststehenden optischen Lichtband 9 gedreht werden kann. Wie darüber hinaus zu erkennen ist, grenzt das Lichtband 9 unmittelbar und somit direkt an einen dem Anzeigebereich 8 zugewandten Innenrand 7a des Drehrings 7 an. Das Lichtband 9 umfasst vorzugsweise eine Mehrzahl von separaten Lichtquellen, beispielsweise Leuchtdioden. Abhängig von einer Drehbewegung des Drehrings 7 leuchten spezifische Lichtquellen auf, so dass dadurch, ausgehend von einem Startpunkt der Drehbewegung, dann die zurückgelegte Wegstrecke beziehungsweise der Drehweg des Drehrings 7 optisch angezeigt ist, indem diejenigen Lichtquellen aufleuchten, die dann die Länge dieses Drehwegs optisch darstellen. In Fig. 2 im linken Bild ist hier beispielhaft das Aufleuchten der Lichtquellen, die dann eine Lichtlinie 10 als einen Viertelkreis darstellen, beispielhaft gekennzeichnet. Bei dieser Ausgestaltung ist somit der Drehring 7 ausgehend von seiner 12-Uhr-Stellung bis zur 3-Uhr-Stellung im Uhrzeigersinn gedreht, und dies ist durch die entsprechende Lichtlinie 10 optisch kenntlich gemacht.

Im rechten Bild in Fig. 2 ist als Ausführung der Erfindung dazu gezeigt, dass das Lichtband 9 an einen Außenrand 7b des Drehrings 7 direkt angrenzend angeordnet ist.

Es kann auch vorgesehen sein, dass eine Kombination der Ausführungen in Fig. 2 vorhanden ist und somit sowohl ein Lichtband 9 an den Innenrand 7a angrenzend ausgebildet ist als auch ein Lichtband 9 an den Außenrand 7b angrenzend angeordnet ist. Auf dem Anzeigebereich 8 kann beispielsweise dann auch ein Wert oder ein Wertverhältnis angezeigt werden, welches eine von dem Aufleuchten der Lichtquellen abhängige Information ist. Beispielsweise kann beim Ausführungsbeispiel in Fig. 2 der Wert ein Viertel dargestellt werden, was somit die Weglänge der Lichtline 10 im Verhältnis zu einer Weglänge eines gesamten Umlaufs angibt. Diese Wertanzeige kann auch abhängig von der Basisgröße, wie viele Grundeinteilungen vorliegen, angegeben sein, wobei in Fig. 2 beispielhaft 100 Werteinheiten einem gesamten Umlauf zugeordnet sind und somit bei dem Ausführungsbeispiel in Fig. 2 25 Werteinheiten optisch angezeigt sind. Darüber hinaus ist in Fig. 2 die Ausführung gezeigt, bei welcher die optische Anzeige als zusammenhängende Linie beziehungsweise Lichtlinie 10 dargestellt ist.

In Fig. 3 sind Beispiele gezeigt, bei denen analog zu Fig. 2 Anordnungen und optische Anzeigen ausgebildet sind, jedoch die Lichtlinie 10 nicht als zusammenhängende Linie dargestellt ist, sondern in Einzelsegmenten zusammengesetzt ist, und somit quasi eine gestrichelte Lichtlinie gezeigt ist. Als Alternativbeispiel ist hier im Anzeigebereich 8 diejenige eingestellte Zeitdauer dargestellt, die durch die optische Lichtlinie 10 dann kenntlich gemacht ist und die einen Anteil am Gesamtumlauf angibt, wobei hier Zeiteinheiten dargestellt sind und somit bei einem Gesamtumlauf 60 Minuten dargestellt werden können und in den Beispielen gemäß Fig. 3 durch den Viertelkreis somit 15 Minuten angezeigt beziehungsweise ausgewählt wurden.

Es kann auch vorgesehen sein, dass der Anzeigebereich 8 berührsensitiv ausgebildet ist und somit diesbezüglich auch entsprechende Einstellungsmöglichkeiten und Anzeigeveränderungen ermöglicht sind.

In Fig. 4 ist in beispielhaften Bildern gezeigt, dass automatisch und gleichzeitig mit dem Durchführen einer Drehbewegung des Drehrings 7, beispielsweise durch Berühren mit einem Finger 11 optische Anzeige an dem Lichtband 9 erfolgt und die dann entsprechende Lichtlinie 10 automatisch gleich über die entsprechende Länge mit angezeigt wird und ein entsprechendes Aufleuchten der jeweiligen Lichtquellen erfolgt.

### Bezugszeichenliste

- 1: Haushaltsgerät
- 2: Gehäuse
- 3: Bedienvorrichtung
- 4: Anzeigeeinheit
- 5: Bedienelement
- 6: Bedienelement
- 7: Drehring
- 7a: Innenrand
- 7b: Außenrand
- 8: Anzeigebereich
- 9: optisches Lichtband
- 10: Lichtlinie
- 11: Finger

## Patentansprüche

1. Bedienvorrichtung (3) für ein Haushaltsgerät (1), mit einem Bedienelement (5, 6), welches einen Drehring (7) aufweist, mittels welchem Betriebsbedingungen des Haushaltsgeräts (1) abhängig von einer Drehbewegung einstellbar sind, und das Bedienelement (5, 6) einen elektronischen Anzeigebereich (8) aufweist, der von dem Drehring (7) umgeben ist, wobei an den Drehring (7) angrenzend und separiert dazu ein ringförmig umlaufendes optisches Lichtband (9) ausgebildet ist, durch welches ein von dem Drehring (7) bei einer Drehbewegung zurückgelegter Drehweg in seiner Länge als Lichtlinie (10) optisch angezeigt ist, wobei die Lichtlinie (10) grafisch direkt am Drehring (7), jedoch separiert dazu platziert ist und direkt angrenzend dazu verläuft, wobei das Lichtband (9) an einem dem Anzeigebereich (8) abgewandten Außenrand (7b) des Drehrings (7) angrenzend ausgebildet ist.

2. Bedienvorrichtung (3) nach Anspruch 1, **dadurch gekennzeichnet, dass** das Lichtband (9) zweiteilig ausgebildet ist und sowohl an einem dem Anzeigebereich abgewandten Außenrand des Drehrings angrenzend ausgebildet ist, als auch an einem dem Anzeigebereich (8) zugewandten Innenrand (7a) des Drehrings (7) angrenzend ausgebildet ist.

3. Bedienvorrichtung (3) nach einem der vorhergehenden Ansprüche, **dadurch gekennzeichnet, dass** der zurückgelegte Drehweg durch das Lichtband (9) als zusammenhängende Lichtlinie (10) angezeigt ist.

4. Bedienvorrichtung (3) nach einem der Ansprüche 1 bis 2, **dadurch gekennzeichnet, dass** der zurückgelegte Drehweg durch das Lichtband (9) als aus unterbrochenen Einzelsegmenten zusammengesetzte Lichtlinie (10) angezeigt ist.

5. Bedienvorrichtung (3) nach einem der vorhergehenden Ansprüche, **dadurch gekennzeichnet, dass** die den Drehweg in seiner Länge anzeigende und aufleuchtende Lichtlinie (10) des Lichtbands (9) synchron mit der Drehbewegung erzeugt ist.

6. Bedienvorrichtung (3) nach einem der vorhergehenden Ansprüche, **dadurch gekennzeichnet, dass** eine Anzahl von optisch aufleuchtbaren Lichtsegmenten des Lichtbands (9) 60 pro Umlauf beträgt.

7. Bedienvorrichtung (3) nach einem der vorhergehenden Ansprüche, **dadurch gekennzeichnet, dass** der Anzeigebereich (8) berührsensitiv ausgebildet ist.

8. Haushaltsgerät (1) mit einer Bedienvorrichtung (3) nach einem der vorhergehenden Ansprüche.

## Claims

1. Operating device (3) for a household appliance (1), which operating device (3) has an operating element (5, 6) comprising a rotary ring (7) that can be used to set operating conditions of the household appliance (1) according to a rotary movement, and which operating element (5, 6) comprises an electronic display area (8), which is enclosed by the rotary ring (7), wherein an optical light strip (9) in the form of a circumferential ring is formed adjacent to the rotary ring (7) and separate therefrom, which light strip is used to indicate visually as a light line (10) the length of a rotary path travelled by the rotary ring (7) in a rotary movement, wherein the light line (10) is positioned graphically directly against the rotary ring (7) but separate therefrom, and runs immediately adjacent thereto, wherein the light strip (9) is formed adjacent to an outer edge (7b) of the rotary ring (7) that faces away from the display area (8).

2. Operating device (3) according to claim 1, **characterised in that** the light strip (9) is formed in two parts, and is formed both adjacent to an outer edge of the rotary ring that faces away from the display area and also adjacent to an inner edge (7a) of the rotary ring (7) that faces the display area (8).

3. Operating device (3) according to one of the preceding claims, **characterised in that** the light strip (9) indicates the rotary path travelled as a continuous line light (10).

4. Operating device (3) according to one of claims 1 to 2, **characterised in that** the light strip (9) indicates the rotary path travelled as a light line (10) composed of discontinuous individual segments.

5. Operating device (3) according to one of the preceding claims, **characterised in that** the light line (10) of the light strip (9), which light line indicates and illuminates the length of the rotary path, is produced synchronously with the rotary movement.

6. Operating device (3) according to one of the preceding claims, **characterised in that** a number of optically illuminable light segments of the light strip (9) equals sixty per revolution.

7. Operating device (3) according to one of the preceding claims, **characterised in that** the display area (8) has a touch-sensitive design.

8. Household appliance (1) having an operating device (3) according to one of the preceding claims.

## Revendications

1. Dispositif de commande (3) pour un appareil électroménager (1), comprenant un élément de commande (5, 6), lequel comporte une bague rotative (7), au moyen de laquelle on peut régler les conditions de marche de l'appareil électroménager (1) en fonction d'un mouvement de rotation, et l'élément de commande (5, 6) comprend une zone d'affichage électronique (8) entourée par la bague rotative (7), dans lequel une bande lumineuse périphérique annulaire à signal optique (9) est réalisée sur la bague rotative (7) accolée à elle tout en étant séparée, par laquelle une trajectoire de rotation parcourue par la bague rotative (7) lors d'un mouvement rotatif, s'affiche visuellement dans sa longueur en tant que ligne lumineuse (10), la ligne lumineuse (10) étant placée graphiquement et directement sur la bague rotative (7), mais en étant séparée, et la suit en la frôlant directement, dans lequel la bande lumineuse (9) est réalisée adjacente sur un bord extérieur (7b) de la bague rotative (7) tournant le dos à la zone d'affichage (8).

2. Dispositif de commande (3) selon la revendication 1, **caractérisé en ce que** la bande lumineuse (9) est réalisée en deux parties et est réalisée adjacente autant sur un bord extérieur de la bague rotative tournant le dos à la zone d'affichage qu'adjacente sur le bord intérieur (7a) de la bague rotative (7) tournée vers la zone d'affichage (8).

3. Dispositif de commande (3) selon l'une des revendications précédentes, **caractérisé en ce que** la bande lumineuse (9) indique la trajectoire de rotation parcourue en tant que ligne lumineuse (10) continue.

4. Dispositif de commande (3) selon l'une des revendications 1 à 2, **caractérisé en ce que** la bande lumineuse (9) indique la trajectoire de rotation parcourue en tant que ligne lumineuse (10) composée d'éléments isolés interrompus.

5. Dispositif de commande (3) selon l'une des revendications précédentes, **caractérisé en ce que** la ligne lumineuse (10) de la bande lumineuse (9) illuminant et indiquant dans sa longueur la trajectoire de rotation est produite synchronisée sur le mouvement de rotation.

6. Dispositif de commande (3) selon l'une des revendications précédentes, **caractérisé en ce que** le nombre de segments lumineux de la bande lumineuse (9) éclairés par un signal optique est de 60 par tour.

7. Dispositif de commande (3) selon l'une des revendications précédentes, **caractérisé en ce que** la zone d'affichage (8) est tactile.

8. Appareil électroménager (1) comprenant un dispositif de commande (3) selon l'une des revendications précédentes.
